# EUROPEAN PATENT APPLICATION

(11) **EP 3 239 308 A1**
(43) Date of publication of application: **01.11.2017**
(21) Application number: 17171814.1
(22) Date of filing: 22.12.2009
(51) Int. Cl.: C21C 5/28, C04B 5/06, C21C 1/02, C22B 1/16

(54) **METHOD FOR RECLAIMING IRON AND PHOSPHORUS FROM STEELMAKING SLAG**

(30) Priority: 26.12.2008 JP 2008331686; 27.01.2009 JP 2009015046
(62) Divisional of application: 09835099.4
(71) Applicant: JFE STEEL CORPORATION, Tokyo 100-0011 (JP)
(72) Inventor: KIKUCHI, Naoki, Tokyo, Tokyo 100-0011 (JP); MATSUI, Akitoshi, Tokyo, Tokyo 100-0011 (JP); TAKAHASHI, Katsunori, Tokyo, Tokyo 100-0011 (JP); TOBO, Hiroyuki, Tokyo, Tokyo 100-0011 (JP); KISHIMOTO, Yasuo, Tokyo, Tokyo 100-0011 (JP)
(74) Representative: Grünecker Patent- und Rechtsanwälte PartG mbB

(57) **Abstract**

The invention provides a method for recovering (collecting) iron and phosphorus from steelmaking slag, which includes a first step in which phosphorus-containing steelmaking slag such as dephosphorization slag is reduced using a reducing agent containing for example carbon, Si or Al to reduce iron oxide and phosphorus oxide in the slag and to recover them as phosphorus-containing molten iron, a second step in which the steelmaking slag from which the iron oxide and the phosphorus oxide have been removed is used as a CaO source in a sintering step and the resultant sintered ore is recycled to a blast furnace, a third step in which the phosphorus-containing molten iron recovered by the reduction is dephosphorized to a phosphorus concentration in the phosphorus-containing molten iron of not more than 0.1% by mass, thereby phosphorus being concentrated in a CaO-containing flux, and a fourth step in which the phosphorus-containing molten iron dephosphorized to a phosphorus concentration of not more than 0.1% by mass is mixed as an iron source with a blast furnace hot metal. The method thus enables inexpensive recovery of phosphorus and iron from the steelmaking slag, and the phosphorus and the iron recovered are effectively used as resources.

## Description

### Technical Field

The present invention relates to a method for recovering (collecting) iron and phosphorus from steelmaking slag containing phosphorus, for example dephosphorization slag resulting from a hot metal dephosphorization process.

### Background Art

Hot metal produced in a blast furnace contains phosphorus (P) that originates from components in iron ores. Since phosphorus is harmful to steel materials, steel production conventionally involves a dephosphorization process to improve the material properties of iron and steel products. In a typical dephosphorization process, phosphorus present in hot metal or molten steel is oxidized with oxygen gas or iron oxide and the phosphorus oxide is removed by being trapped in CaO-based slag. The oxidation of phosphorus in hot metal or molten steel with oxygen gas also oxidizes iron. Therefore, the slag contains iron as iron oxide even if no iron oxide has been added thereto. The phosphorus-containing steelmaking slag obtained by hot metal dephosphorization or decarburization refining in a converter furnace is usually discharged from the system of the steel making process for use as, for example, civil engineering materials. That is, phosphorus and iron present in the phosphorus-containing steelmaking slag are not recovered. The term "dephosphorization process" refers to a process that removes phosphorus from hot metal before the hot metal is decarburized and refined in a converter furnace.

From the viewpoints of environmental protection and resource saving, the industry has recently been working on reducing the amount of steelmaking slag by for example recycling steelmaking slag. For example, slag that is formed in the decarburization refining of dephosphorized hot metal in a converter furnace (slag resulting from the decarburization refining in a converter furnace will be referred to as "converter furnace slag") is recycled as an iron source and a CaO source for flux to a blast furnace through the use thereof in the sintering of iron ores or the like. The converter furnace slag is also recycled as a CaO source in hot metal pretreatment steps.

Phosphorus is substantially absent in converter furnace slag that is obtained in the decarburization refining in a converter furnace of hot metal that has been dephosphorized (hereinafter, also "dephosphorized hot metal"), in particular dephosphorized hot metal that has been dephosphorized to a level of phosphorus concentration that is acceptable for a product. Therefore, recycling the slag to a blast furnace will not increase (pickup) the phosphorus concentration in the hot metal. In contrast, problems are caused when the slag recycled to a blast furnace contains phosphorus, as encountered in the recycling of dephosphorization slag that is produced during the dephosphorization process, or converter furnace slag that is obtained in the decarburization refining in a converter furnace of hot metal which is not dephosphorized (also referred to as "normal hot metal") or dephosphorized hot metal which has been dephosphorized but in which the phosphorus concentration after the dephosphorization does not reach the level that is acceptable for a product. That is, such recycling results in a vicious circle in which the phosphorus recycled as oxide to a blast furnace is reduced in the blast furnace and increases the phosphorus concentration in the hot metal, and consequently the load is increased for the dephosphorization of the hot metal. Various proposals have then been made with respect to the recycling of phosphorus-containing steelmaking slag to prevent the phosphorus pickup, in particular for the recycling of the slag to steps which involve reduction and refining. Needless to mention, phosphorus-containing slag has a degraded function as a dephosphorizing agent and thus recycling thereof to an oxidation step such as dephosphorization results in a limited amount of resources that are recycled.

For example, PTL 1 discloses that molten stainless steel is produced by a combination of the steps of melting, reducing and refining chrome ore and the steps of decarburizing and refining in a converter furnace the chrome-containing hot metal produced by the melting, reducing and refining steps, wherein a carbon-containing material is added to the dephosphorization slag generated by the dephosphorization of the chrome-containing hot metal and the slag is heated to perform gasification dephosphorization, and the dephosphorization slag from the gasification dephosphorization is recycled to the steps of melting, reducing and refining.

PTL 2 discloses that molten blast furnace slag and molten converter furnace slag are mixed together, and at least one of carbon, silicon and magnesium is added to the slag mixture and oxygen gas is simultaneously blown thereinto to reduce the phosphorus oxide in the slag mixture to phosphorus vapor and to oxidize sulfur (S) in the slag mixture to SO₂, these are then volatilized to obtain low-phosphorus and low-sulfur slag, and the slag is recycled to a blast furnace or a converter furnace.

Further, PTL 3 discloses that dephosphorization slag which has resulted from the dephosphorization of hot metal or molten steel with a flux based on an alkali metal carbonate is treated with water and carbon dioxide to give an extract containing the alkali metal phosphate, and a calcium compound is added to the extract to precipitate phosphorus as calcium phosphate, which is thereafter separated and recovered.

### Citation List

### Patent Literature

PTL 1: Japanese Unexamined Patent Application Publication No. 2004-143492
PTL 2: Japanese Unexamined Patent Application Publication No. 55-97408
PTL 3: Japanese Unexamined Patent Application Publication No. 56-22613

### Summary of Invention

### Technical Problem

However, the conventional art described above has the following problems.

PTL 1 enables the recycling of the dephosphorization slag by removing phosphorus by gasification dephosphorization. However, it does not address recovering the phosphorus removed by the gasification dephosphorization. Thus, the recycling technique is not effective from the viewpoint of recovery of a phosphorus resource.

According to PTL 2, phosphorus-containing converter furnace slag is mixed with blast furnace slag in a substantially equal amount to that of the converter furnace slag. However, the blast furnace slag has been recently not regarded as a waste but is accepted as a valuable resource useful as civil engineering and building materials. Thus, using the blast furnace slag for the dilution of converter furnace slag is economically disadvantageous.

The technique according to PTL 3 is a wet process. Wet processes involve expensive chemicals and large-scale facilities, increasing the facility costs and the operation costs.

The present invention has been made in view of the problems described above. It is therefore an object of the invention to provide a method for recovering iron and phosphorus from steelmaking slag which allows for inexpensive recovery of phosphorus and iron from phosphorus-containing steelmaking slag such as dephosphorization slag or converter furnace slag and thereby allows the slag to be recycled, and which also allows for effective use of the recovered phosphorus and iron as resources.

### Solution to Problem

To achieve the above object, a first aspect of the present invention provides a method for recovering (collecting) iron and phosphorus from steelmaking slag, which includes a first step in which phosphorus-containing steelmaking slag produced in a steel refining process is reduced using a reducing agent containing at least one of carbon, silicon and aluminum to reduce iron oxide and phosphorus oxide in the steelmaking slag and to recover (collect) them as phosphorus-containing molten iron from the steelmaking slag, a second step in which the steelmaking slag from which the iron oxide and the phosphorus oxide have been removed is recycled as a CaO source in a pig iron production step or a steel production step, a third step in which the phosphorus-containing molten iron recovered (collected) by the reduction is dephosphorized using a fluorine-free CaO-based flux to a phosphorus concentration in the phosphorus-containing molten iron of not more than 0.1% by mass, thereby phosphorus being concentrated in the CaO-containing flux, and a fourth step in which the phosphorus-containing molten iron that has been dephosphorized to a phosphorus concentration of not more than 0.1% by mass is mixed as an iron source with a blast furnace hot metal tapped from a blast furnace.

A second aspect of the invention is directed to a method for recovering iron and phosphorus from steelmaking slag according to the first aspect, wherein slag produced in the decarburization refining of hot metal in a converter furnace (converter furnace slag) is subjected to the reduction in the first step.

A third aspect of the invention is directed to a method for recovering iron and phosphorus from steelmaking slag according to the first aspect, wherein a mixture of slag obtained in the decarburization refining of hot metal in a converter furnace and slag produced in a hot metal dephosphorization process (dephosphorization slag) is subjected to the reduction in the first step.

A fourth aspect of the invention is directed to a method for recovering iron and phosphorus from steelmaking slag according to any of the first to the third aspect, wherein the phosphorus-containing molten iron is hot metal containing carbon at not less than 3% by mass.

A fifth aspect of the invention is directed to a method for recovering iron and phosphorus from steelmaking slag according to any of the first to the fourth aspects, wherein the reduction in the first step is performed in the presence of blast furnace hot metal.

A sixth aspect of the invention is directed to a method for recovering iron and phosphorus from steelmaking slag according to any of the first to the fifth aspects, wherein the steelmaking slag in the second step from which the iron oxide and the phosphorus oxide have been removed is recycled to
an iron ore sintering step or
a hot metal production step in a blast furnace.

A seventh aspect of the invention is directed to a method for recovering iron and phosphorus from steelmaking slag according to any of the first to the fifth aspects, wherein the steelmaking slag in the second step from which the iron oxide and the phosphorus oxide have been removed is recycled to
a hot metal dephosphorization step or
a hot metal decarburization refining step in a converter furnace.

An eighth aspect of the invention is directed to a method for recovering iron and phosphorus from steelmaking slag according to any of the first to the seventh aspects, wherein the CaO-containing flux used in the third step for concentrating phosphorus is used (after the concentration) as a phosphorus resource. In general, the CaO-containing flux used in the third step for concentrating phosphorus is recovered as phosphorus concentrated slag.

### Advantageous Effects of Invention

The present invention enables the recycling of phosphorus-containing steelmaking slag such as dephosphorization slag produced in a hot metal dephosphorization process, or converter furnace slag obtained in the decarburization refining in a converter furnace of normal hot metal or insufficiently dephosphorized hot metal. First, iron oxide and phosphorus oxide in the steelmaking slag are reduced and recovered as phosphorus-containing molten iron. The steelmaking slag from which the iron oxide and the phosphorus oxide have been removed is recycled as a CaO source in a pig iron production step or a steel production step. The phosphorus-containing molten iron is dephosphorized to a phosphorus concentration of not more than 0.1% by mass, and is mixed with a blast furnace hot metal. By the dephosphorization, the phosphorus in the phosphorus-containing molten iron is concentrated in the CaO-containing flux to a concentration that is sufficient to be recovered as a phosphorus resource. In this manner, the steelmaking slag may be recycled to a pig iron production step or a steel production step without causing problems such as an increase of the phosphorus concentration in hot metal or deteriorated functions as a dephosphorizing agent, and the iron and the phosphorus recovered from the steelmaking slag may be effectively used as resources.

### Brief Description of Drawings

[Fig. 1] Fig. 1 is a schematic view of a dephosphorization process facility used in the invention.
[Fig. 2] Fig. 2 is a graph showing behaviors of phosphorus during a dephosphorization process for high-phosphorus hot metal.

### Description of Embodiments

The present invention will be described in detail hereinbelow.

The present inventors performed studies with a view toward recycling phosphorus-containing steelmaking slag such as dephosphorization slag produced in a hot metal dephosphorization process or converter furnace slag obtained in the decarburization refining in a converter furnace of normal hot metal or dephosphorized hot metal which has been dephosphorized but still has a higher phosphorus concentration than the phosphorus concentration acceptable for a product, so that the slag can be used as a dephosphorizing agent or a CaO source for flux, in a pig iron production step or a steelmaking step. First, the inventors studied approaches to eliminate the influence of phosphorus contained in the steelmaking slag, on hot metal tapped from a blast furnace.

Converter furnace slag produced in the decarburization refining of hot metal that has been dephosphorized to a phosphorus concentration acceptable for a product is recycled as a flux to a blast furnace through the use thereof in the sintering of iron ore, without increasing the phosphorus concentration in the hot metal. Accordingly, removing phosphorus from phosphorus-containing steelmaking slag will allow the slag to be recycled in a blast furnace. The present inventors then studied the removal of phosphorus from phosphorus-containing steelmaking slag.

In phosphorus-containing steelmaking slag, phosphorus is present in the form of an oxide, P₂O₅. Further, steelmaking slag generally contains CaO and SiO₂ in major proportions. The present inventors have found that P₂O₅ in the phosphorus-containing steelmaking slag is easily reduced by reducing the phosphorus-containing steelmaking slag with carbon, silicon, aluminum and the like because phosphorus has a lower affinity for oxygen compared to calcium (Ca) and silicon (Si). In this case, the phosphorus-containing steelmaking slag contains iron in the form of oxides such as FeO and Fe₂O₅ (hereinafter, collectively referred to as "FeₓO"). The oxygen affinity of these iron oxides is similar to that of phosphorus. Thus, it has been also found that FeₓO in the phosphorus-containing steelmaking slag is simultaneously reduced when the steelmaking slag is reduced with carbon, silicon, aluminum and the like.

It has been further found that phosphorus has high solubility in iron and the phosphorus produced by the reduction is rapidly dissolved in the iron formed by the reduction. In view of the object of the invention that phosphorus-containing steelmaking slag is refined to low-phosphorus steelmaking slag by removing phosphorus therefrom, the present inventors have found that the reduction is desirably carried out at high temperatures so that the iron produced by the reduction will be in a molten state to permit the phosphorus from the reduction to be rapidly separated from the steelmaking slag. That is, since molten iron inherently separates from slag easily, reducing iron such that the reduced iron will be in a molten state promotes the separation of iron from the steelmaking slag. Further, it has been found that the capability of phosphorus to dissolve in molten iron allows for rapid separation of phosphorus from the steelmaking slag. It has been also found that the separation of phosphorus-containing iron is further facilitated when the steelmaking slag is in a molten state.

In this case, the separation of the molten iron and the slag is promoted with decreasing melting point of the molten iron produced. It has been then found preferable that carbon is dissolved in the molten iron to produce hot metal as the molten iron. In detail, the liquidus-line temperature of hot metal becomes 1300°C or lower when the carbon concentration is not less than 3% by mass. Thus, it has been found preferable that the carbon concentration in the hot metal is not less than 3% by mass. To dissolve carbon in the formed molten iron, carbon may be used as a reducing agent. In the case where silicon or aluminum is used as a reducing agent, carbon may be allowed to be present in the steelmaking slag. Through these treatments, the produced molten iron is carburized into hot metal which contains phosphorus at a high concentration. (This hot metal will be referred to as "high-phosphorus hot metal" and is distinguished from blast furnace hot metal.)

It has been also found that all the above-mentioned conditions are satisfied and the separation of phosphorus from steelmaking slag is facilitated when a blast furnace hot metal is added beforehand and the phosphorus-containing steelmaking slag is reduced in the presence of the blast furnace hot metal. That is, it has been found preferable that if a blast furnace hot metal is available, the hot metal is added beforehand and the phosphorus-containing steelmaking slag is reduced in the presence thereof. The obtainable high-phosphorus hot metal in this case is slightly diluted with the blast furnace hot metal added.

The mass ratio of phosphorus to iron (P/Fe) in the phosphorus-containing steelmaking slag is 0.005 to 0.075. Thus, the molten iron after the reduction (the high-phosphorus hot metal) contains phosphorus at approximately 0.5 to 7.5% by mass. In contrast, the current level of phosphorus concentration in blast furnace hot metal that is tapped from a blast furnace is approximately 0.1% by mass. Accordingly, the usage of the high-phosphorus hot metal is limited or the use thereof as an iron source can be unfeasible unless the high-phosphorus hot metal having a phosphorus concentration of 0.5 to 7.5% by mass can be dephosphorized to the level of blast furnace hot metal, i.e., a phosphorus concentration of approximately 0.1% by mass.

A dephosphorization test was then carried out in which blast furnace hot metals adjusted to four levels of phosphorus concentration, 4.0% by mass (Level 1), 2.0% by mass (Level 2), 1.1% by mass (Level 3) and 0.5% by mass (Level 4), were used as alternatives to the high-phosphorus hot metals and were dephosphorized with a dephosphorization process facility currently used in the dephosphorization processing for blast furnace hot metals. The phosphorus concentration in the blast furnace hot metals was adjusted using iron-phosphorus alloy.

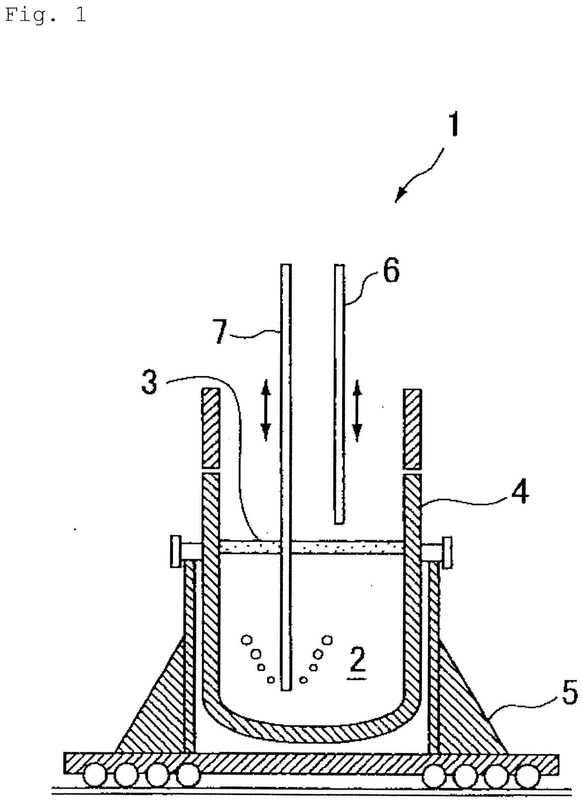

Fig. 1 shows a schematic view of the dephosphorization process facility used. In Fig. 1, a hot-metal transfer ladle 4, which contains a high-phosphorus hot metal 2 having the adjusted phosphorus concentration, has been carried on a ladle truck 5 and has been brought into a dephosphorization process facility 1. The dephosphorization process facility 1 has a top lance 6 and an injection lance 7 that can be moved vertically inside the hot-metal transfer ladle 4. The top lance 6 blows oxygen gas or iron oxide such as iron ore to the high-phosphorus hot metal 2, while the injection lance 7 injects a CaO-based flux or iron oxide into the high-phosphorus hot metal 2. The dephosphorization process facility 1 further has, although not shown in Fig. 1, material supply units such as a hopper and a chute for adding a CaO-containing flux or iron oxide on the hot metal surface from the top in the hot-metal transfer ladle 4.

With the use of the dephosphorization process facility 1, the high-phosphorus hot metal 2 was dephosphorized by simultaneously blowing oxygen gas from the top lance 6 and a CaO-containing powdery flux and nitrogen gas as a carrier gas from the injection lance 7. The injected CaO-containing flux is molten and forms a dephosphorization slag 3. In this case, phosphorus in the high-phosphorus hot metal is oxidized with the oxygen gas to P₂O₅, and the oxide is incorporated in the CaO-containing flux that has formed slag. The dephosphorization of the high-phosphorus hot metal 2 proceeds in this manner. The experiment conditions are described in Table 1. The CaO-containing flux used herein was burned lime containing no fluorine sources such as fluorite. The predetermined amount of CaO may be added to the hot metal in a manner such that the flux is blown from the injection lance 7 as well as from the top lance 6 to the hot metal surface together with the oxygen gas.
[Table 1]

**Table 1**

| | |
|---|---|
| Amount of high-phosphorus hot metal | 200 t |
| Amount of top-blown oxygen gas | 10-40 Nm³/t |
| Amount of added CaO | 10-80 kg/t |
| Amount of nitrogen gas | 0.2 Nm³/t |
| Dephosphorization time | 20 min |

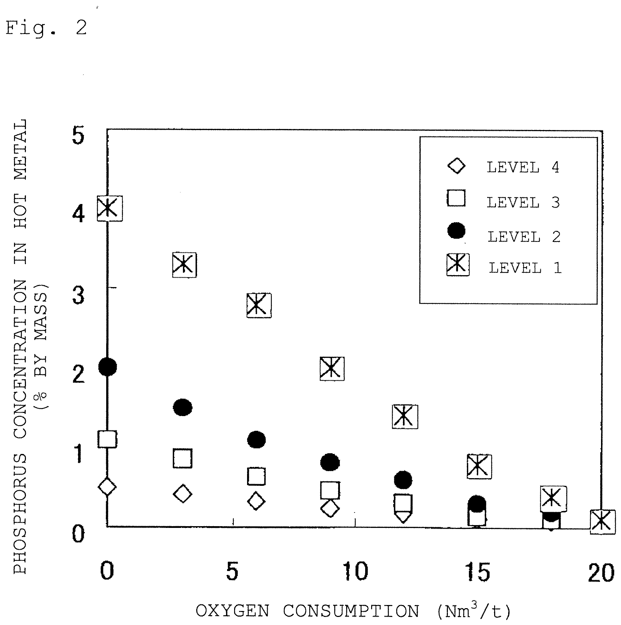

Fig. 2 shows the behaviors of phosphorus in the high-phosphorus hot metal in the dephosphorization process in the experiments. The horizontal axis indicates the oxygen consumption (Nm³/ton of hot metal), and the vertical axis indicates the phosphorus concentration (% by mass) in the hot metal. The levels are assigned with respective symbols. (The unit Nm³ indicates the volume under standard conditions: 0°C, 1013 hPa and 0% relative humidity.) As shown in Fig. 2, the dephosphorization reaction rate was found to be higher with increasing phosphorus concentration in the hot metal prior to the initiation of the dephosphorization process. Further, the experiments showed that the high-phosphorus hot metal 2 could be dephosphorized to the level comparable to blast furnace hot metal, namely a phosphorus concentration of approximately 0.1% by mass, even by the dephosphorization process that has been conventionally performed for blast furnace hot metals. It was furthermore confirmed that the high-phosphorus hot metal 2 that had been dephosphorized was comparable to blast furnace hot metal, and was usable as an iron source to be mixed with blast furnace hot metal. To be distinguished from blast furnace hot metal, the hot metal obtained by dephosphorizing the high-phosphorus hot metal to a low phosphorus concentration by the above process will still be referred to as the high-phosphorus hot metal.

Table 2 shows the compositions of the dephosphorization slags obtained in the dephosphorization process. In order that the dephosphorization slags are recovered as phosphorus concentrated slags and are effectively used as phosphorus resources, the composition is preferably substantially equal to that of phosphate ore, namely 3CaO·P₂O₅ (CaO:P₂O₅ mass ratio = 54:46). Thus, the target was determined that the dephosphorization slag contained at least 20% by mass of P₂O₅.
[Table 2]

**Table 2**

| | Composition of dephosphorization slag (% by mass) | | | | | |
|---|---|---|---|---|---|---|
| | CaO | SiO₂ | P₂O₅ | FeₓO | MgO | MnO |
| Level 1 | 38 | 3 | 43 | 14 | 1 | 1 |
| Level 2 | 34 | 5 | 37 | 21 | 2 | 1 |
| Level 3 | 27 | 7 | 28 | 30 | 4 | 4 |
| Level 4 | 20 | 11 | 20 | 39 | 5 | 5 |

As shown in Table 2, even the Level 4 hot metal which had a phosphorus concentration of 0.5% by mass before the dephosphorization process afforded dephosphorization slag containing P₂O₅ at 20% by mass. Further, the Level 1 and Level 2 hot metals gave dephosphorization slags having a higher P₂O₅ concentration than the CaO concentration. This result showed that P₂O₅ was concentrated to a higher degree than in the composition of 3CaO·P₂O₅, and the dephosphorization slags (phosphorus concentrated slags) were sufficiently usable as phosphorus resources. The main applications as phosphorus resources include phosphorus fertilizers.

It is known that CaO-containing fluxes used in the dephosphorization process for blast furnace hot metals achieve facilitated fluxing of CaO by the addition thereto of approximately 5% by mass of fluorine sources such as fluorite, and consequently the dephosphorization reaction is promoted. However, in the case where the dephosphorization slag (phosphorus concentrated slag) obtained as described above is used as, for example, a phosphorus fertilizer, fluorine elutes from the phosphorus fertilizer (dephosphorization slag) and may contaminate the soil in excess of the level stipulated by the environmental quality standards for soil. Thus, fluorine sources are not used in the invention.

The present invention has been made based on the results of the above testing. The method for recovering iron and phosphorus from steelmaking slag according to the invention includes:
a first step in which phosphorus-containing steelmaking slag produced in a steel refining process is reduced using a reducing agent containing at least one of carbon, silicon and aluminum to reduce iron oxide and phosphorus oxide in the steelmaking slag and to recover them as phosphorus-containing molten iron,
a second step in which the steelmaking slag from which the iron oxide and the phosphorus oxide have been removed is recycled as a CaO source in a pig iron production step or a steel production step,
a third step in which the phosphorus-containing molten iron recovered by the reduction is dephosphorized using a fluorine-free CaO-containing flux to a phosphorus concentration in the phosphorus-containing molten iron of not more than 0.1% by mass, thereby phosphorus being concentrated in the CaO-containing flux, and
a fourth step in which the phosphorus-containing molten iron that has been dephosphorized to a phosphorus concentration of not more than 0.1% by mass is mixed as an iron source with a blast furnace hot metal tapped from a blast furnace.

The above constitution according to the present invention enables the recycling of phosphorus-containing steelmaking slag such as dephosphorization slag produced in a hot metal dephosphorization process or converter furnace slag obtained in the decarburization refining in a converter furnace of normal hot metal or insufficiently dephosphorized hot metal. First, iron oxide and phosphorus oxide in the steelmaking slag are reduced and recovered as phosphorus-containing molten iron. The steelmaking slag from which the iron oxide and the phosphorus oxide have been removed is recycled as a CaO source in a pig iron production step or a steel production step. The phosphorus-containing molten iron is dephosphorized to a phosphorus concentration of not more than 0.1% by mass, and is mixed with a blast furnace hot metal. By the dephosphorization, the phosphorus in the phosphorus-containing molten iron is concentrated in the CaO-containing flux to a concentration that is sufficient to be recovered as a phosphorus resource. In this manner, the iron and the phosphorus contained in the steelmaking slag may be effectively used as resources without causing problems such as an increase of the phosphorus concentration in hot metal.

Phosphorus is contained at a low but not zero concentration even in converter furnace slag obtained by the decarburization refining of hot metal which has been dephosphorized to a level of phosphorus concentration acceptable for a product. Accordingly, the present invention is applicable to such converter furnace slags. However, since the phosphorus concentration in such slag is low, recycling the slag directly to a blast furnace or the like causes only negligible phosphorus influences, and the application of the invention instead results in an increase in cost. Therefore, among the steelmaking slags produced in various refining treatments and treatments preliminary thereto in the steel production steps, the phosphorus-containing steelmaking slags of interest in the present invention are steelmaking slags which contain phosphorus in at least a concentration such that recycling the steelmaking slag to a blast furnace or the like will increase the phosphorus concentration in the hot metal or molten steel and will cause an increase in cost in comparison with normal operations.

As described above, the steelmaking slag from which the iron oxide and the phosphorus oxide have been removed by the reduction treatment may be recycled in:
applications in which the slag is used as a CaO source (flux) in the sintering of iron ore and is thereafter used as a material that is added in a hot metal production step in a blast furnace. In addition, the steelmaking slag may be suitably recycled in:
   applications in which the slag is used directly as a flux in a hot metal production step in a blast furnace,
   applications in which the slag is used as a CaO-containing flux that works as a dephosphorizing agent in a dephosphorization process for blast furnace hot metals,
   applications in which the slag is used as a flux in a decarburization refining step for hot metal in a converter furnace, and
   applications in which the slag is used as a CaO-containing desulfurizing agent in a desulfurization process for blast furnace hot metals. The steelmaking slags may be recycled as burned lime substitutes in other pig iron production steps and steel production steps in steel plant which involve burned lime.

The methods according to the invention are suitably applied to phosphorus-containing steelmaking slags such as:
single converter furnace slag that is obtained by the decarburization refining in a converter furnace of normal hot metal or insufficiently dephosphorized hot metal, and
a mixture of the above converter furnace slag and dephosphorization slag obtained by a hot metal dephosphorization process.

The reason for this is that the converter furnace slag has a high (usually about 3 to 5) basicity (% by mass of CaO/% by mass of SiO₂) and is useful as a CaO source when the second step is a step in which iron ore is sintered. Since the converter furnace slag has high basicity and poor fluxing properties in the sintering step, the converter furnace slag may be mixed with dephosphorization slag when the fluxing properties should be improved. The dephosphorization slag has a basicity of about 1.5 to 2.5, and SiO₂ contained therein provides improved fluxing properties. That is, the use of a mixture of the converter furnace slag and the dephosphorization slag allows for smooth sintering even if fluorine sources are not used in the sintering step. Further, because the phosphorus concentration in the phosphorus-containing molten iron is increased when the mixture is used, the CaO-containing flux (phosphorus concentrated slag) recovered after the dephosphorization in the third step has an increased phosphorus concentration and is more valuable as a phosphorus resource. However, the use of the dephosphorization slag alone is not preferable because the basicity is so low that the slag is not sufficient as a CaO source in the sintering step.

When the steelmaking slag that is subjected to the reduction in the first step is a mixture of the converter furnace slag and the dephosphorization slag, the SiO₂ contained in the dephosphorization slag improves fluxing properties of the steelmaking slag to be reduced, thereby promoting the separation of the steelmaking slag and the phosphorus-containing molten iron resulting from the reduction.

Although the whole amount of converter furnace slag produced may be subjected to the reduction in the first step in the invention, the use of converter furnace slag in a hot metal dephosphorization process is effective from the viewpoint of resource saving. In view of this, part of the produced converter furnace slag may be used as a CaO source in a hot metal dephosphorization process and the remaining converter furnace slag may be subjected to the reduction in the first step.

### EXAMPLES

### EXAMPLE 1

Blast furnace hot metal tapped from a blast furnace was poured into a torpedo car. The blast furnace hot metal in the torpedo car was subjected to desiliconization and dephosphorization and was thereafter poured into a hot-metal transfer ladle. The blast furnace hot metal in the hot-metal transfer ladle was desulfurized while performing mechanical stirring. The desulfurized blast furnace hot metal was charged into a converter furnace and was decarburized and refined in the converter furnace. Thus, molten steel was produced from the blast furnace hot metal. The present invention was applied to these steps of pig iron production to steel production. Table 3 shows examples of the chemical components of the blast furnace hot metal and the molten steel analyzed from the tapping from the blast furnace to the completion of the decarburization and refining in the converter furnace.
[Table 3]

**Table 3**

| | Chemical components (% by mass) | | | | |
|---|---|---|---|---|---|
| | C | Si | P | Mn | S |
| Poured blast furnace hot metal | 4.5 | 0.25 | 0.105 | 0.15 | 0.03 |
| Blast furnace hot metal after desiliconization and dephosphorization | 4.4 | 0.02 | 0.050 | 0.02 | 0.03 |
| Blast furnace hot metal after desulfurization | 4.4 | 0.02 | 0.050 | 0.02 | 0.002 |
| Molten steel after completion of decarburization in converter furnace | 0.03 | 0.01 | 0.012 | 0.01 | 0.003 |

As shown in Table 3, the blast furnace hot metal after the desiliconization and the dephosphorization contained 0.05% by mass of phosphorus, which was high compared to the level of phosphorus concentration acceptable for a product (0.025% by mass or below). The converter furnace slag which was formed in the decarburization and refining of this blast furnace hot metal in the converter furnace would contain approximately 1.5% by mass of phosphorus (approximately 3.4% by mass of P₂O₅). The recycling of this steelmaking slag as a CaO source in a sintering step would increase the phosphorus concentration in the blast furnace hot metal. Thus, a test was carried out in which the present invention was applied to the converter furnace slag (Inventive Example 1).

250 Tons of the converter furnace slag, 50 tons of blast furnace hot metal, and coke as a reducing agent were charged into a three-phase alternating current electrical arc furnace. An arc was struck to heat the converter furnace slag and the coke, and thereby the converter furnace slag was reduced. The purpose of charging the blast furnace hot metal was so that the hot metal previously present in the furnace would promote the reduction of the steelmaking slag being heated and further so that the hot metal would facilitate the separation from the steelmaking slag of the phosphorus-containing iron that resulted from the reduction of the steelmaking slag by quickly incorporating the phosphorus-containing iron. The temperature of the blast furnace hot metal was 1300°C. The reduction treatment for 30 minutes produced approximately 100 tons of high-phosphorus hot metal including the blast furnace hot metal that had been charged beforehand. Table 4 sets forth the conditions in the reduction treatment. Table 5 shows the composition of the steelmaking slag before and after the reduction treatment.
[Table 4]

**Table 4**

| | |
|---|---|
| Amount of charged steelmaking slag | 250 t |
| Amount of charged blast furnace hot metal | 50 t |
| Coke consumption | 40 kg/t of slag |
| Electrical power | 1000 kWh/t |
| Processing time | 30 min |
| Hot metal temperature | 1300-1400°C |

[Table 5]

**Table 5**

| | | Slag composition (% by mass) | | | | | |
|---|---|---|---|---|---|---|---|
| | | CaO | SiO₂ | P | FeₓO | MgO | MnO |
| Inventive Example 1 | Before reduction | 47 | 15.5 | 1.5 | 25 | 4.5 | 1.2 |
| | After reduction | 65 | 25 | 0.1 | 1.1 | 7.7 | 0.3 |
| Inventive Example 2 | Before reduction | 35 | 17 | 2.0 | 27 | 4.9 | 2.7 |
| | After reduction | 50 | 24 | tr | tr | 7.0 | 0.1 |

Further, a test was carried out in which the present invention was applied to a mixture of the dephosphorization slag produced in the hot metal dephosphorization process and the converter furnace slag (mixing ratio = 1:1) (Inventive Example 2). The composition of the converter furnace slag was the same as that of the converter furnace slag used in Inventive Example 1 (see Table 5). The composition of the dephosphorization slag was CaO: 22% by mass, SiO₂: 18% by mass, P: 2.4% by mass, FeₓO: 28% by mass, MgO: 5.2% by mass, and MnO: 4.1% by mass.

Into the electrical arc furnace described above, 250 tons of the mixture of the converter furnace slag and the dephosphorization slag, 50 tons of blast furnace hot metal, and coke as a reducing agent were charged. An arc was struck to heat the slag mixture and the coke, and thereby the slag mixture was reduced. The purpose of charging the blast furnace hot metal was so that the hot metal previously present in the furnace would promote the reduction of the slag mixture being heated and further so that the slag mixture would facilitate the separation from the slag mixture of the phosphorus-containing iron that resulted from the reduction of the slag mixture by quickly incorporating the phosphorus-containing iron.

The slag in the furnace was made molten faster than in Inventive Example 1, and the reduction treatment for 25 minutes produced approximately 100 tons of high-phosphorus hot metal including the blast furnace hot metal that had been charged beforehand. The conditions in the reduction treatment were the same as those described in Table 4. Table 5 shows the composition of the slag mixture before and after the reduction treatment.

In each of Inventive Examples 1 and 2, the high-phosphorus hot metal obtained was tapped from the arc furnace to a hot-metal transfer ladle. Thereafter, approximately 200 tons of the steelmaking slag remaining in the furnace was discharged to a slag pot (pan). The chemical components in the high-phosphorus hot metals were carbon: 4.3% by mass, silicon: 0.01% by mass, manganese: 2.2% by mass, phosphorus: 3.0% by mass and sulfur: 0.05% by mass in Inventive Example 1, and were carbon: 4.3% by mass, silicon: 0.01% by mass, manganese: 3.1% by mass, phosphorus: 4.5% by mass and sulfur: 0.05% by mass in Inventive Example 2. The results were similar except that the phosphorus concentration was higher in Inventive Example 2.

The P/Fe ratio in phosphorus-containing steelmaking slags generally ranges from 0.5 to 7.5% by mass in terms of P concentration. In Inventive Examples, the slag was diluted with the blast furnace hot metal to approximately 1/2 concentration. Thus, the P concentration to be considered in the present case is in the range of 0.25 to 3.75% by mass. The above phosphorus concentrations fall in this range, and the results are in agreement with the conventional results. The high-phosphorus hot metals were dephosphorized using the dephosphorization process facility illustrated in Fig. 1. Table 6 shows the conditions of the dephosphorization process for the high-phosphorus hot metals in Inventive Examples 1 and 2.
[Table 6]

**Table 6**

| | Inventive Example 1 | Inventive Example 2 |
|---|---|---|
| Amount of high-phosphorus hot metal | 100 t | 100 t |
| Amount of top-blown oxygen gas | 25 Nm³/t | 25 Nm³/t |
| Amount of added CaO | 25 kg/t | 25 kg/t |
| Amount of nitrogen gas | 0.2 Nm³/t | 0.5 Nm³/t |
| Dephosphorization time | 25 min | 25 min |

Through the dephosphorization process, the phosphorus concentration in the high-phosphorus hot metal was reduced to 0.1% by mass in Inventive Examples 1 and 2. Table 7 describes the chemical compositions of the high-phosphorus hot metals before and after the dephosphorization process.
[Table 7]

**Table 7**

| | | Chemical components in high-phosphorus hot metal (% by mass) | | | | |
|---|---|---|---|---|---|---|
| | | C | Si | P | Mn | S |
| Inventive Example 1 | Before dephosphorization | 4.3 | 0.01 | 3.0 | 2.2 | 0.05 |
| | After dephosphorization | 4.0 | 0.01 | 0.1 | 0.01 | 0.05 |
| Inventive Example 2 | Before dephosphorization | 4.3 | 0.01 | 4.5 | 3.1 | 0.05 |
| | After dephosphorization | 4.0 | 0.01 | 0.1 | 0.01 | 0.05 |

The high-phosphorus hot metal after the dephosphorization process was mixed with blast furnace hot metal. The hot metal obtained by the mixing was desiliconized and dephosphorized, was thereafter desulfurized, and was charged into a converter furnace. The hot metal was refined in the converter furnace in a usual manner, and molten steel having a predetermined composition was produced. The dephosphorization of the high-phosphorus hot metal produced dephosphorization slag (phosphorus concentrated slag) containing CaO: 62% by mass, SiO₂: 2.2% by mass, P: 28% by mass, FeₓO: 2.8% by mass, MgO: 4% by mass and MnO: 0.8% by mass in both Inventive Example 1 and Inventive Example 2. The phosphorus concentrated slags were usable as phosphorus fertilizers.

On the other hand, the converter furnace slag after the reduction treatment was cooled and was used as a CaO source for flux in the sintering of iron ore. The sintered iron ore produced was charged as an iron source into a blast furnace, and a blast furnace hot metal was produced. The phosphorus concentration in the blast furnace hot metal was approximately 0.1% by mass and was of no problem.

In contrast, the converter furnace slag which resulted from the aforementioned steel production steps was recycled directly as a CaO source for sintering iron ore. As a result, the hot metal tapped from the blast furnace had a high phosphorus concentration, and a 1.5 times increase was caused in the consumption of dephosphorizing agents (oxygen source and CaO-containing flux) and the amount of dephosphorization slag produced in the dephosphorization process for the hot metal. Further, the productivity was lowered by 20%.

In the present invention, approximately 80% by mass of iron contained in the converter furnace slag was recovered. This recovery was substantially of the same level as when the converter furnace slag was recycled directly as a CaO source for sintering iron ore.

### Industrial Applicability

According to the present invention, phosphorus and iron are recovered inexpensively from phosphorus-containing steelmaking slag such as dephosphorization slag or converter furnace slag, and the steelmaking slag after the recovery is recycled as a CaO source in a pig iron production step or a steel production step. Further, the phosphorus and the iron recovered are effectively used as resources. Thus, the present invention allows for highly effective use of resources in the steel production steps.

### Reference Signs List

- 1: DEPHOSPHORIZATION PROCESS FACILITY
- 2: HIGH-PHOSPHORUS HOT METAL
- 3: DEPHOSPHORIZATION SLAG
- 4: HOT-METAL TRANSFER LADLE
- 5: LADLE TRUCK
- 6: TOP LANCE
- 7: INJECTION LANCE

## Claims

1. A method for collecting iron and phosphorus from steelmaking slag, comprising:
a first step in which phosphorus-containing steelmaking slag produced in a steel refining process is reduced using a reducing agent containing at least one of carbon, silicon and aluminum to reduce iron oxide and phosphorus oxide in the steelmaking slag and to collect iron and phosphorus as phosphorus-containing molten iron from the phosphorus-containing steelmaking slag,
an optional second step in which the steelmaking slag, from which the iron oxide and the phosphorus oxide have been removed, is recycled as a CaO source in a pig iron production step or a steel production step,
a third step in which the phosphorus-containing molten iron collected by the reduction is dephosphorized using a fluorine-free CaO-containing flux to a phosphorus concentration in the phosphorus-containing molten iron of not more than 0.1% by mass, thereby phosphorus being concentrated to 20% or more as P₂O₅ in the CaO-containing flux, and
an optional fourth step in which the phosphorus-containing molten iron that has been dephosphorized to a phosphorus concentration of not more than 0.1 % by mass is mixed as an iron source with a blast furnace hot metal tapped from a blast furnace.

2. The method for collecting iron and phosphorus from steelmaking slag according to Claim 1, wherein slag produced in the decarburization refining of hot metal in a converter furnace is subjected to the reduction in the first step.

3. The method for collecting iron and phosphorus from steelmaking slag according to Claim 1, wherein a mixture of slag obtained in the decarburization refining of hot metal in a converter furnace and slag produced in a hot metal dephosphorization process is subjected to the reduction in the first step.

4. The method for collecting iron and phosphorus from steelmaking slag according to any one of Claims 1 to 3, wherein the phosphorus-containing molten iron is hot metal containing carbon at not less than 3% by mass.

5. The method for collecting iron and phosphorus from steelmaking slag according to any one of Claims 1 to 4, wherein the reduction in the first step is performed in the presence of blast furnace hot metal.

6. The method for collecting iron and phosphorus from steelmaking slag according to any one of Claims 1 to 5, wherein the steelmaking slag in the second step is recycled to
an iron ore sintering step or
a hot metal production step in a blast furnace.

7. The method for collecting iron and phosphorus from steelmaking slag according to any one of Claims 1 to 5, wherein the steelmaking slag in the second step is recycled to
a hot metal dephosphorization step or
a hot metal decarburization refining step in a converter furnace.

8. The method for collecting iron and phosphorus from steelmaking slag according to any one of Claims 1 to 7, wherein the CaO-containing flux used in the third step for concentrating phosphorus is used as a phosphorus resource.
